# EUROPEAN PATENT APPLICATION

(11) **EP 4 635 380 A1**
(43) Date of publication of application: **22.10.2025**
(21) Application number: 25163525.6
(22) Date of filing: 13.03.2025
(51) Int. Cl.: A47J 42/08

(54) **GRINDING DEVICE**

(30) Priority: 18.04.2024 CN 202420810698 U
(71) Applicant: Ningbo Chefshere Kitchen Technology Co., Ltd, Ningbo, Zhejiang 315000 (CN)
(72) Inventor: Zhang, Guoping, Ningbo (CN)
(74) Representative: Schwarz & Partner Patentanwälte GmbH

(57) **Abstract**

The present disclosure relates to the technical field of grinders, in particular to a grinding device. The grinding device comprises a shell (1) and an adjusting mechanism, a male grinding head (200) and a female grinding head (100) are arranged in the shell, a grinding channel is formed between the male grinding head (200) and the female grinding head (100), the adjusting mechanism comprises a first adjusting assembly (2) and a second adjusting assembly, the first adjusting assembly (2) is connected with the shell, the second adjusting assembly comprises a first adjusting sleeve (3) and a second adjusting sleeve (4) which are screwed together, the first adjusting sleeve (3) is rotated accordingly when the first adjusting assembly (2) is rotated, the second adjusting sleeve (4) is driven by the rotation of the first adjusting sleeve (3) to move up and down, and the size of the grinding channel is changed by the up and down movement of the second adjusting sleeve (4). As the first adjusting sleeve (3) and the second adjusting sleeve (4) are screwed together, the range of the up and down movement of the second adjusting sleeve is relatively fine, thus the change in the size of the grinding channel is also relatively fine; therefore, the particle size of a ground material can be easily and accurately controlled, and a desired particle size can be easily obtained by a user.

## Description

### Technical Field

The present disclosure relates to the technical field of grinders, in particular to a grinding device.

### Background

In recent years, coffee culture has become increasingly popular, and more and more people have begun to pursue high-quality coffee. As one of the core technologies of coffee making, handheld grinders are more and more favored by coffee enthusiasts. Grinders can be used not only for grinding coffee but also for grinding seasonings such as Chinese prickly ash, pepper, and salt to enrich the taste of food.

Generally, a grinder comprises a male grinding head, a female grinding head and an adjusting rod, the adjusting rod is located in a hole in the center of the male grinding head, the male grinding head and the female grinding head are rotated relatively during grinding (either the male or the female grinding head is rotated), grinding fineness adjustment is realized through the adjusting rod by making the male grinding head move up and down along the adjusting rod, and a resetting element need to be arranged around the adjusting rod to reset the male grinding head.

An invention patent with a patent number of 202320982666.6 discloses an adjusting mechanism for a grinder and a grinder, wherein the adjusting mechanism comprises a limiting assembly and an adjusting assembly, and the adjusting assembly is movably connected with the outer side of the limiting assembly; the inner wall of the limiting assembly is provided with an accommodating groove, and an external grinding head is placed in the accommodating groove; the outer wall of the limiting assembly is provided with an adjusting groove, and the inner wall of the adjusting assembly is provided with an adjusting bump matched with the adjusting groove; when the adjusting bump is driven by the adjusting assembly to rotate, the external grinding head can be driven by the limiting assembly to move axially to change the size of a grinding channel. Although the size of the grinding channel can be changed by the rotation of the adjusting bump driven by the adjusting assembly, the span of the grinding channel adjusted in this way is large, and the particles of a ground material cannot be finely adjusted, which makes it difficult for a user to obtain a relatively satisfactory particle size.

### Summary

In view of the defects or problems in the prior art, the present disclosure provides a grinding device. The grinding device has a compact structure and can adjust the size of ground particles conveniently and precisely.

To solve the above problems, the present disclosure adopts the following technical solution: a grinding device, comprising a shell and an adjusting mechanism, a male grinding head and a female grinding head are arranged in the shell, a grinding channel is formed between the male grinding head and the female grinding head, the adjusting mechanism comprises a first adjusting assembly and a second adjusting assembly, the first adjusting assembly is connected with the shell, the second adjusting assembly comprises a first adjusting sleeve and a second adjusting sleeve which are screwed together, the first adjusting sleeve is rotated accordingly when the first adjusting assembly is rotated, the second adjusting sleeve is driven by the rotation of the first adjusting sleeve to move up and down, and the size of the grinding channel is changed by the up and down movement of the second adjusting sleeve.

In some embodiments, the inner wall of the first adjusting assembly is provided with at least one first limiting groove, the outer wall of the first adjusting sleeve is provided with at least one first limiting bulge, the position of the first limiting groove is corresponding to that of the first limiting bulge, and the first limiting bulge is located in the first limiting groove.

In some embodiments, the inner wall of the first adjusting assembly is provided with at least one second limiting bulge, the outer wall of the first adjusting sleeve is provided with at least one second limiting groove, the position of the second limiting groove is corresponding to that of the second limiting bulge, and the second limiting bulge is located in the second limiting groove.

In preferred embodiments, the first adjusting sleeve is provided with internal threads, the second adjusting sleeve is provided with external threads, and the first adjusting sleeve and the second adjusting sleeve are screwed together through the internal and external threads.

In preferred embodiments, the second adjusting sleeve comprises a connecting part and an accommodating part, the connecting part and the accommodating part are integrated in one piece, the size of the accommodating part is greater than that of the connecting part, the connecting part is arranged above the accommodating part, the external threads are provided on the outer peripheral wall of the connecting part, and the accommodating part is sleeved outside the female grinding head.

In preferred embodiments, the inner peripheral wall of the connecting part is provided with a diversion surface, and the diversion surface is arranged at the upper end of the connecting part.

In preferred embodiments, the second adjusting assembly also comprises a third adjusting sleeve, the third adjusting sleeve is arranged below the second adjusting sleeve and connected with the second adjusting sleeve, the second adjusting sleeve moves upward to drive the third adjusting sleeve to move upward, and the lower end of the female grinding head is in contact with the upper edge of the third adjusting sleeve.

In some embodiments, the outer peripheral wall of the third adjusting sleeve is provided with at least one first clamping bulge, the inner peripheral wall of the accommodating part is provided with at least one first clamping groove, and the first clamping bulge is matched with the first clamping groove to make the third adjusting sleeve clamped with the second adjusting sleeve.

In some embodiments, the outer peripheral wall of the third adjusting sleeve is provided with an external thread section, the inner peripheral wall of the accommodating part is provided with an internal thread section, and the third adjusting sleeve is screwed together with the second adjusting sleeve.

In preferred embodiments, the grinding device also comprises a support frame, the support frame is arranged between the first adjusting assembly and the first adjusting sleeve, the support frame is provided with a hollow structure, and the first adjusting assembly is connected to the first adjusting sleeve at the hollow structure.

In some embodiments, a first connecting sleeve is connected above the shell, and the first connecting sleeve is connected with a feeding assembly.

In some embodiments, a second connecting sleeve is arranged between the first adjusting assembly and the accommodating part, the inner peripheral wall of the second connecting sleeve is provided with a second clamping bulge, the outer peripheral wall of the accommodating part is provided with a second clamping groove at a corresponding position, and the second clamping bulge is located in the second clamping groove.

In preferred embodiments, the outer peripheral wall of the second connecting sleeve is provided with a holding groove, a telescopic bead is arranged in the holding groove, and the inner peripheral wall of the first adjusting assembly is provided with a plurality of recesses.

Compared with the existing products, the first adjusting sleeve is rotated accordingly when the first adjusting assembly is rotated, and the second adjusting sleeve is driven by the rotation of the first adjusting sleeve to move up and down. As the first adjusting sleeve and the second adjusting sleeve are screwed together, the range of the up and down movement of the second adjusting sleeve is relatively fine, thus the change in the size of the grinding channel is also relatively fine; therefore, the particle size of a ground material can be easily and accurately controlled, and a desired particle size can be easily obtained by the user. In addition, as the first adjusting sleeve and the second adjusting sleeve are screwed together, the first adjusting sleeve and the second adjusting sleeve have a self-locking function, which makes the grinding device work more stably and reliably during grinding; when the second adjusting sleeve is maintained in a certain state, the size of the grinding channel is effectively fixed, so that the particle size of the ground material is relatively uniform.

### Description of Drawings

The present application will be further described below in detail in combination with the drawings and preferred embodiments. However, those skilled in the art will understand that the drawings are only drawn for the purpose of explaining the preferred embodiments, and thus shall not be taken as a limitation to the scope of the present application. In addition, unless otherwise specified, the drawings only schematically illustrate the composition or structure of the described object and may include exaggerated displays, and the drawings are not necessarily drawn to scale.
Fig. 1 is a structural schematic diagram of a grinding device of the present disclosure;
Fig. 2 is a sectional view of a grinding device of the present disclosure;
Fig. 3 is a structural schematic diagram of a shell of the present disclosure;
Fig. 4 is a structural schematic diagram of a support frame of the present disclosure;
Fig. 5 is a structural schematic diagram of a first connecting sleeve of the present disclosure;
Fig. 6 is a structural schematic diagram of a first adjusting sleeve of the present disclosure;
Fig. 7 is a structural schematic diagram of a second adjusting sleeve of the present disclosure;
Fig. 8 is a structural schematic diagram of a second connecting sleeve of the present disclosure;
Fig. 9 is a structural schematic diagram of a first adjusting assembly of the present disclosure;
Fig. 10 is another structural schematic diagram of a grinding device of the present disclosure;
Fig. 11 is another sectional view of a grinding device of the present disclosure;
Fig. 12 is a structural schematic diagram of a third connecting sleeve of the present disclosure;
Fig. 13 is another structural schematic diagram of a third connecting sleeve of the present disclosure;
Fig. 14 is another structural schematic diagram of a first adjusting assembly of the present disclosure;
Fig. 15 is another structural schematic diagram of a support frame of the present disclosure;
Fig. 16 is still another structural schematic diagram of a support frame of the present disclosure;
Fig. 17 is another structural schematic diagram of a second adjusting sleeve of the present disclosure;
Fig. 18 is another structural schematic diagram of a first adjusting sleeve of the present disclosure;
Fig. 19 is still another structural schematic diagram of a grinding device of the present disclosure.

### Reference Signs:

1. Shell; 11. first connecting groove; 2. first adjusting assembly; 21. first limiting groove; 22. recess; 3. first adjusting sleeve; 30. third adjusting sleeve; 31. first limiting bulge; 4. second adjusting sleeve; 40. sealing cover; 41. connecting part; 42. accommodating part; 43. diversion surface; 44. second clamping groove; 45. third limiting bulge; 5. support frame; 51. connecting bulge; 52. first positioning bulge; 53. second positioning bulge; 54. step surface; 55. third limiting groove; 6. first connecting sleeve; 61. installing groove; 7. second connecting sleeve; 71. second clamping bulge; 72. telescopic bead; 73. notch; 8. feeding assembly; 9. third connecting sleeve; 91. second connecting groove; 10. material receiving bin; 100. female grinding head; 200. male grinding head; and 300. motor.

### Detailed Description

To make those skilled in the art better understand the technical solution of the present disclosure, the present disclosure will be clearly and fully described in detail below in combination with the drawings and the embodiments. It should be understood that specific embodiments described herein are only used for explaining the present disclosure, not used for limiting the present disclosure.

It should be understood for those skilled in the art that in the disclosure of the present invention, terms such as "longitudinal", "transverse", "upper", "lower", "front", "rear", "left", "right", "vertical", "horizontal", "top", "bottom", "inner", "outer", etc. indicate direction or position relationships shown based on the drawings, and are only intended to facilitate the description of the present invention and the simplification of the description rather than to indicate or imply that the indicated device or element must have a specific direction or constructed and operated in a specific direction, and therefore, the above terms shall not be understood as a limitation to the present invention.

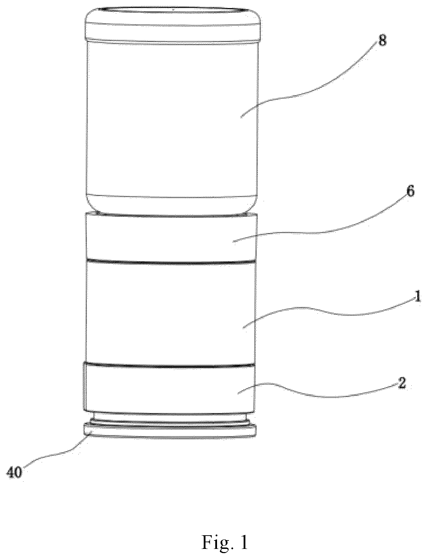

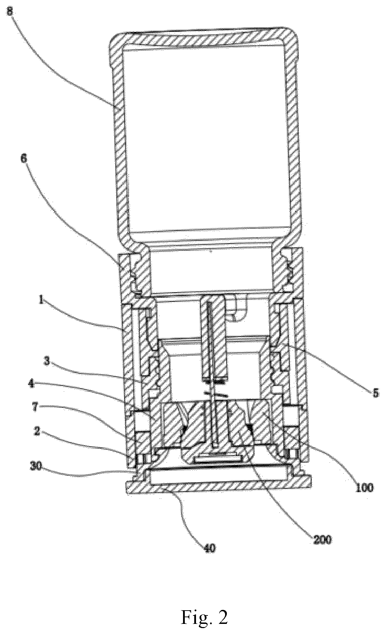

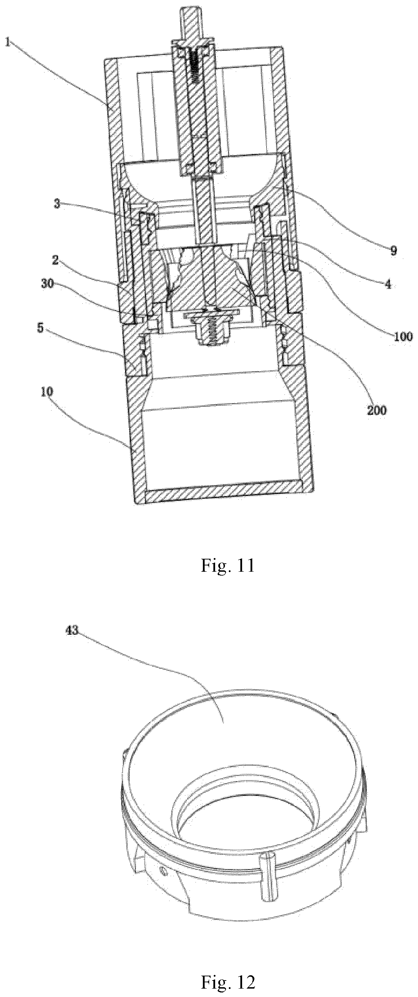

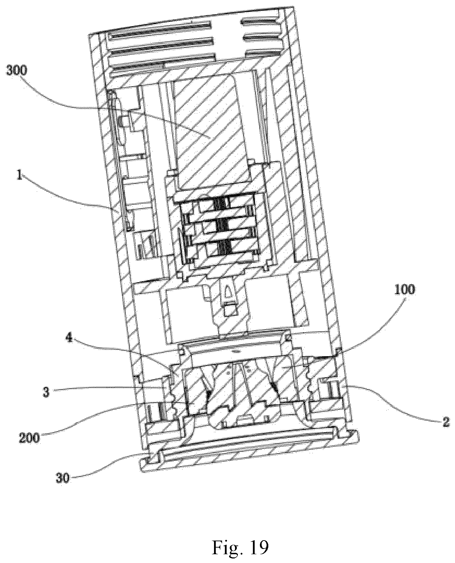

As shown in Fig. 1, Fig. 2, Fig. 10 and Fig. 11, the present disclosure provides a grinding device, comprising a shell 1 and an adjusting mechanism, a male grinding head 200 and a female grinding head 100 are arranged in the shell 1, a grinding channel is formed between the male grinding head 200 and the female grinding head 100, the adjusting mechanism comprises a first adjusting assembly 2 and a second adjusting assembly, the first adjusting assembly 2 is roughly annular in structure and is connected with the shell 1, the second adjusting assembly comprises a first adjusting sleeve 3 and a second adjusting sleeve 4 which are screwed together, the first adjusting sleeve 3 is rotated accordingly when the first adjusting assembly 2 is rotated, the second adjusting sleeve 4 is driven by the rotation of the first adjusting sleeve 3 to move up and down, and the size of the grinding channel is changed by the up and down movement of the second adjusting sleeve 4. The first adjusting sleeve 3 is rotated accordingly when the first adjusting assembly 2 is rotated, and the second adjusting sleeve 4 is driven by the rotation of the first adjusting sleeve 3 to move up and down. As the first adjusting sleeve 3 and the second adjusting sleeve 4 are screwed together, the range of the up and down movement of the second adjusting sleeve 4 is relatively fine, thus the change in the size of the grinding channel is also relatively fine; therefore, the particle size of a ground material can be easily and accurately controlled, and a desired particle size can be easily obtained by a user. In addition, as the first adjusting sleeve 3 and the second adjusting sleeve 4 are screwed together, the first adjusting sleeve 3 and the second adjusting sleeve 4 have a self-locking function, which makes the grinding device work more stably and reliably during grinding; when the second adjusting sleeve 4 is maintained in a certain state, the size of the grinding channel is effectively fixed, so that the particle size of the ground material is relatively uniform. It should be noted that the adjusting mechanism can be used in a manual grinding device (as shown in Fig. 1, Fig. 2 and Fig. 11) and an electric grinding device (as shown in Fig. 19), the electric grinding device is provided with a motor 300, and the male grinding head 200 or the female grinding head 100 is driven by the motor 300 to rotate.

### Embodiment 1

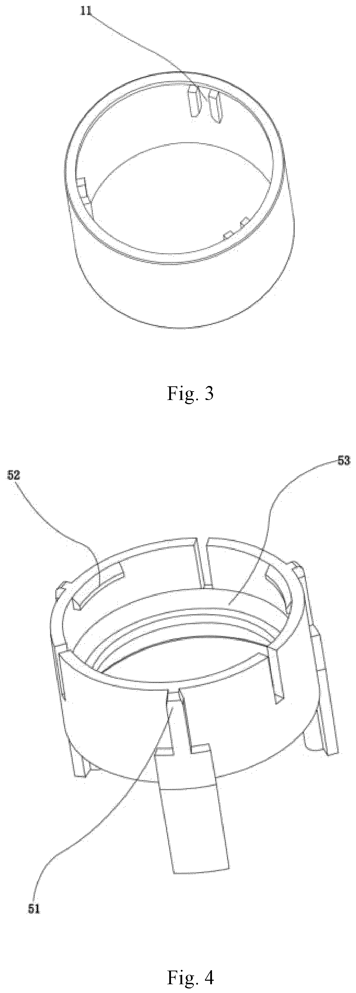

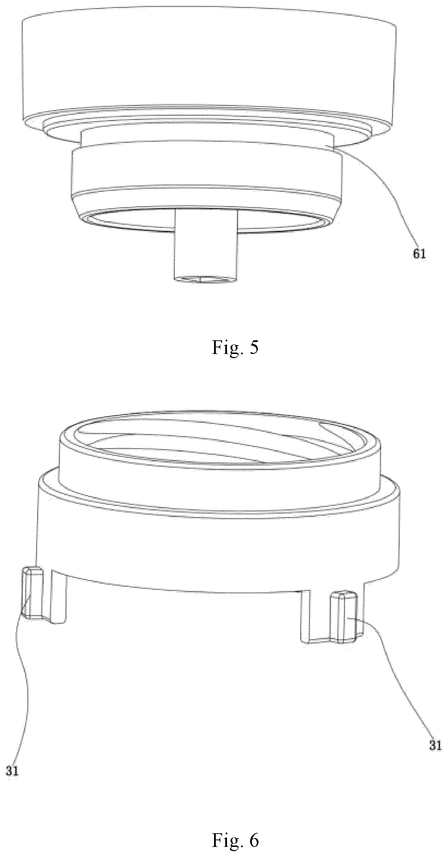

As shown in Fig. 1-Fig. 9, a first connecting sleeve 6 is connected above the shell 1, the first connecting sleeve 6 is arranged above the first adjusting sleeve 3, the first connecting sleeve 6 is connected with a feeding assembly 8, and a material to be ground enters the grinding channel through the feeding assembly 8. Specifically, the feeding assembly 8 is in a bottle or pot shape, the outer peripheral wall of the feeding assembly 8 is provided with external threads, the inner peripheral wall of the first connecting sleeve 6 is provided with internal threads, and the feeding assembly 8 and the first connecting sleeve 6 are screwed together. The first connecting sleeve 6 is provided with a step surface 54, an opening of the feeding assembly 8 is butted with the step surface 54, and the step surface 54 is arranged to isolate the direct contact between the shell 1 and the material to be ground, so as to avoid the material to be ground from sticking to the shell 1 or leaking from the joint of the shell 1. The second adjusting sleeve 4 comprises a connecting part 41 and an accommodating part 42, the connecting part 41 and the accommodating part 42 are integrated in one piece, the size of the accommodating part 42 is greater than that of the connecting part 41, the cross section of the second adjusting sleeve 4 is in an inverted T-shape, the connecting part 41 is arranged above the accommodating part 42, the outer peripheral wall of the connecting part 41 is provided with external threads, the first adjusting sleeve 3 is provided with internal threads, the first adjusting sleeve 3 and the second adjusting sleeve 4 are screwed together through the internal and external threads, and the accommodating part 42 is sleeved outside the female grinding head 100.

Further, the inner peripheral wall of the connecting part 41 is provided with a diversion surface 43 at the upper part, and the diversion surface 43 is used for guiding the material to be ground from the feeding assembly 8 into the grinding channel. The upper part of the outer peripheral wall of the connecting part 41 is tightly fitted with the lower part of the first connecting sleeve 6 to prevent the material to be ground from falling into a gap between the connecting part 41 and the first connecting sleeve 6. The inner wall of the first adjusting assembly 2 is provided with at least one first limiting groove 21, and the outer wall of the first adjusting sleeve 3 is provided with at least one first limiting bulge 31. Preferably, the first limiting bulge 31 has a square bump structure, the position of the first limiting groove 21 is corresponding to that of the first limiting bulge 31, and the first limiting bulge 31 is located in the first limiting groove 21, so that when the first adjusting assembly 2 is rotated, the first adjusting sleeve 3 is also rotated.

Further, the grinding device also comprises a support frame 5, the support frame 5 is arranged between the first adjusting assembly 2 and the first adjusting sleeve 3, the support frame 5 is provided with a hollow structure, and the first adjusting assembly 2 is connected with the first adjusting sleeve 3 at the position of the hollow structure. The shell 1 has a hollow cylindrical structure, the inner peripheral wall of the shell 1 is provided with a plurality of first connecting grooves 11, the outer peripheral wall of the support frame 5 is provided with a plurality of connecting bulges 51, and the first connecting grooves 11 is matched with the connecting bulges 51 to make the shell 1 connected to the support frame 5. The inner peripheral wall of the support frame 5 is provided with a first positioning bulge 52 and a second positioning bulge 53, the second positioning bulge 53 has an annular bulge structure, the first positioning bulge 52 is arranged above the second positioning bulge 53, the outer peripheral wall of the first connecting sleeve 6 is provided with an installing groove 61, the first positioning bulge 52 is installed in the installing groove 61, the second positioning bulge 53 is arranged between the first connecting sleeve 6 and the first adjusting sleeve 3, and the upper surface of the second positioning bulge 53 is in contact with the lower end of the first connecting sleeve 6 after the support frame 5 is connected with the first connecting sleeve 6. On the one hand, the support frame 5 is arranged to make the structure of the grinding device more stable, and on the other hand, the support frame 5 is located on the inner side of the shell 1, which makes the tightness of the grinding device better and avoids material leakage.

Preferably, the second adjusting assembly also comprises a third adjusting sleeve 30, the third adjusting sleeve 30 is arranged below the second adjusting sleeve 4 and connected with the second adjusting sleeve 4, the second adjusting sleeve 4 moves upward to drive the third adjusting sleeve 30 to move upward, and the lower end of the female grinding head 100 is in contact with the upper edge of the third adjusting sleeve 30. Specifically, the outer peripheral wall of the third adjusting sleeve 30 is provided with at least one first clamping bulge, the inner peripheral wall of the accommodating part 42 is provided with at least one first clamping groove, the first clamping bulge is matched with the first clamping groove to make the third adjusting sleeve 30 clamped with the second adjusting sleeve 4, and the third adjusting sleeve 30 is driven by the up and down movement of the second adjusting sleeve 4 to move up and down. The upper end of the female grinding head 100 is in contact with the lower end of the connecting part 41, the lower end of the grinding head 100 is in contact with the upper edge of the third adjusting sleeve 30, i.e., the female grinding head 100 is placed between the two and moves up and down with the up and down movement of the third adjusting sleeve 30; in this process, the male grinding head 200 will not move accordingly up and down, but the grinding channel is changed by the up and down movement of the female grinding head 100, so that the particle size of the ground material is changed.

Further, the lower part of the third adjusting sleeve 30 can be connected with a sealing cover 40 or a material receiving assembly, and the sealing cover 40 and the material receiving assembly can be isolated from the outside world to prevent foreign objects from entering the grinding device.

Specifically, a second connecting sleeve 7 is arranged between the first adjusting assembly 2 and the accommodating part 42, the inner peripheral wall of the second connecting sleeve 7 is provided with a second clamping bulge 71, the outer peripheral wall of the accommodating part 42 is provided with a second clamping groove 44 at a corresponding position, and the second clamping bulge 71 is located in the second clamping groove 44. The second clamping bulge 71 plays a role of position limiting; when the second connecting sleeve 7 moves up and down, the second clamping groove 44 moves up and down relative to the second clamping bulge 71; it can be understood that during the up and down movement of the second connecting sleeve 7, the second clamping bulge 71 is always located in the second clamping groove 44.

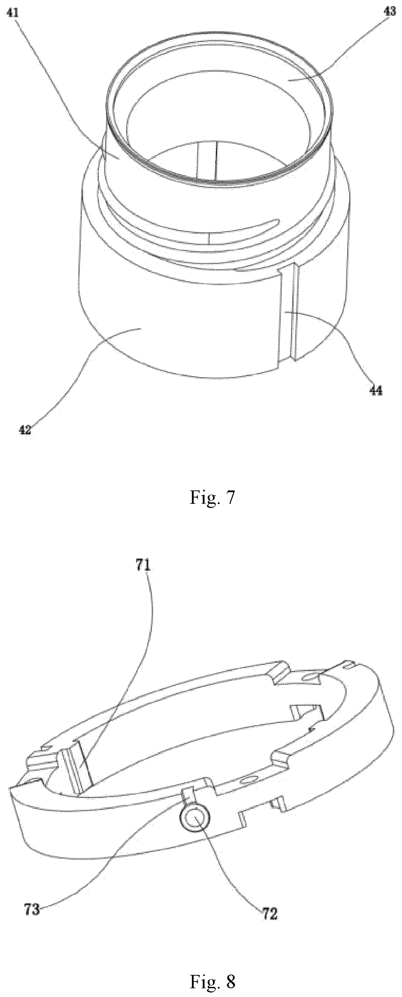

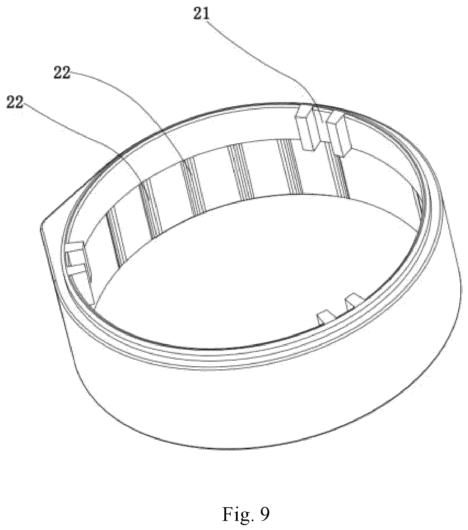

As shown in Fig. 8 and Fig. 9, it should be noted that the outer peripheral wall of the second connecting sleeve 7 is provided with a holding groove, a telescopic bead 72 is arranged in the holding groove, and the inner peripheral wall of the first adjusting assembly 2 is provided with a plurality of recesses 22. When the first adjusting assembly 2 is rotated, the telescopic bead 72 is transferred from one recess 22 to another different recess 22; in this process, a "clicking" sound is emitted, i.e., when the first adjusting assembly 2 is rotated, the second connecting sleeve 7 moves up and down, the grinding channel is changed, and at the same time the telescopic bead 72 will make a "clicking" sound, so that different "gear positions" can be adjusted by a user to obtain a suitable size of ground particles. Preferably, a notch 73 is arranged above the holding groove, this is because that when the telescopic bead 72 is transferred from one recess 22 to another different recess 22, the telescopic bead 72 will constantly pop into and out of the holding groove, which requires the holding groove to have a certain elastic deformation, and the notch 73 is arranged to provide a certain elastic deformation for the holding groove.

### Embodiment 2

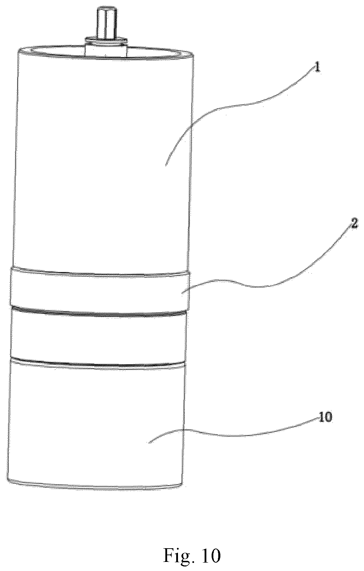

As shown in Fig. 10-Fig. 18, a third connecting sleeve 9 is arranged in the shell 1, the third connecting sleeve 9 is clamped with the shell 1, and the third connecting sleeve 9 is provided with an arc diversion surface 43, so that a material to be ground can enter the grinding channel smoothly. The second adjusting sleeve 4 comprises a connecting part 41 and an accommodating part 42, the connecting part 41 and the accommodating part 42 are integrated in one piece, the size of the accommodating part 42 is greater than that of the connecting part 41, the cross section of the second adjusting sleeve 4 is in an inverted T-shape, the connecting part 41 is arranged above the accommodating part 42, the outer peripheral wall of the connecting part 41 is provided with external threads, the first adjusting sleeve 3 is provided with internal threads, the first adjusting sleeve 3 and the second adjusting sleeve 4 are screwed together through the internal and external threads, the accommodating part 42 is sleeved outside the female grinding head 100, and the connecting part 41 is arranged above the accommodating part 42. The third connecting sleeve 9 is provided with a second connecting groove 91, the opening of the second connecting groove 91 faces downward, the upper end of the first adjusting sleeve 3 and the upper end of the second adjusting sleeve 4 are located in the second connecting groove 91, and the outer peripheral wall of the lower end of the third connecting sleeve 9 is tightly fitted with the inner peripheral wall of the connecting part 41 after the third connecting sleeve 9 is connected with the second adjusting sleeve 4, so that the material to be ground will not leak from the joint of the two.

The grinding device also comprises a support frame 5 and a material receiving bin 10, the upper end of the support frame 5 is clamped with the third connecting sleeve 9, and the lower end of the support frame 5 is connected with the material receiving bin 10 through threads. The support frame 5 is at least partially arranged between the shell 1 and the second adjusting sleeve 4, which enhances the tightness and structural strength of the grinding device.

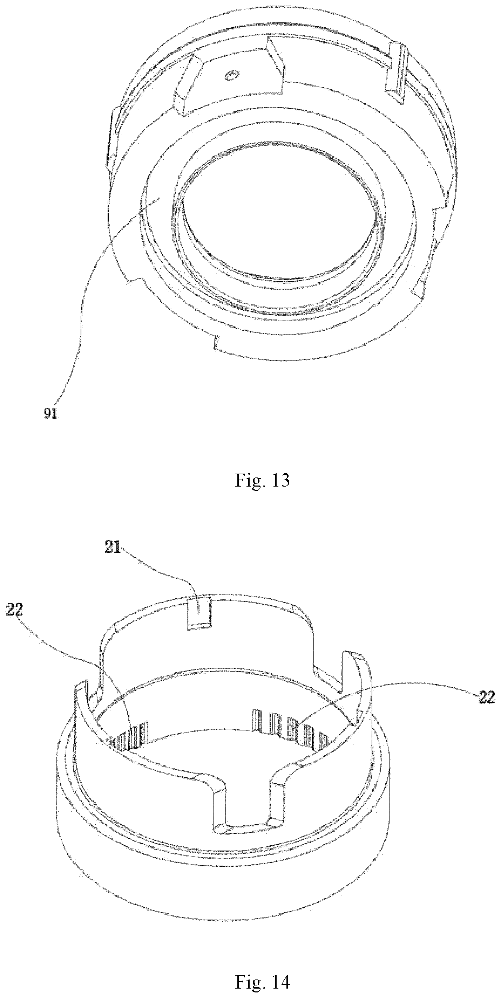

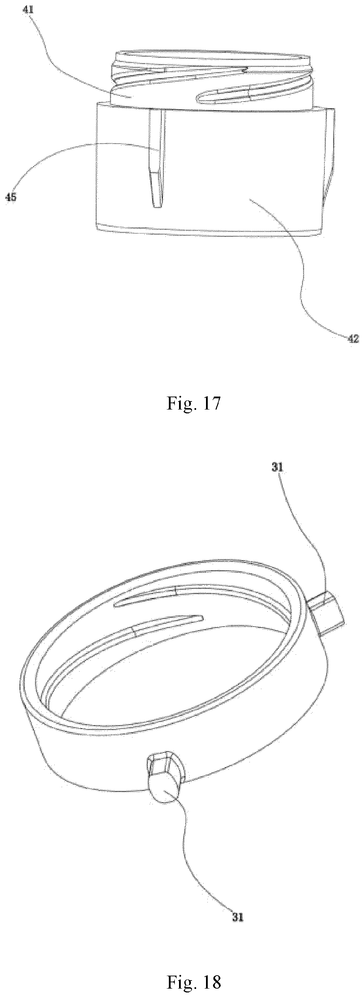

Further, as shown in Fig. 14 and Fig. 18, the inner wall of the first adjusting assembly 2 is provided with at least one first limiting groove 21, the outer wall of the first adjusting sleeve 3 is provided with at least one first limiting bulge 31, the position of the first limiting groove 21 is corresponding to that of the first limiting bulge 31, and the first limiting bulge 31 is located in the first limiting groove 21, so that when the first adjusting assembly 2 is rotated, the first adjusting sleeve 3 is also rotated. The first adjusting sleeve 3 and the second adjusting sleeve 4 are screwed together through the internal and external threads, so that when the first adjusting sleeve 3 is rotated, the second adjusting sleeve 4 moves up and down to change the size of the grinding channel. It is only because the first adjusting sleeve 3 and the second adjusting sleeve 4 are screwed together through the internal and external threads that the size of the grinding channel can be finely adjusted. It can be understood that the support frame 5 is provided with a hollow structure, and the first adjusting assembly 2 is connected with the first adjusting sleeve 3 at the position of the hollow structure.

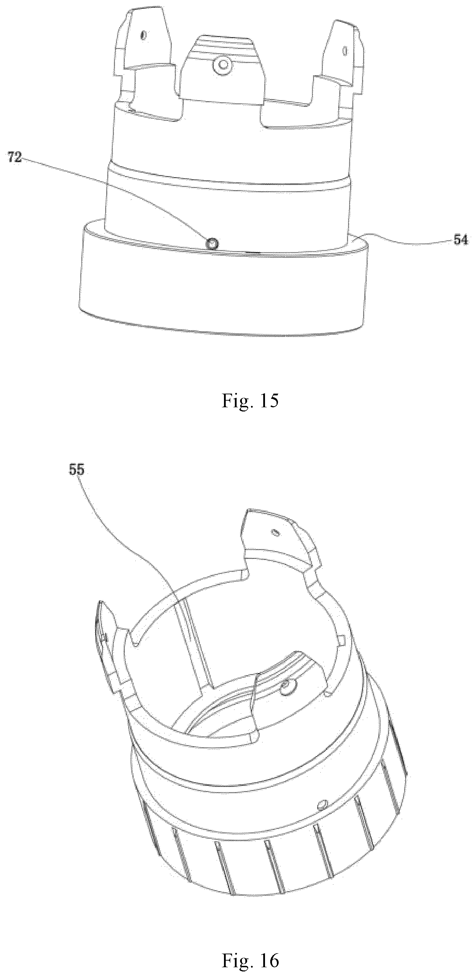

Specifically, as shown in Fig. 16 and Fig. 17, the outer peripheral wall of the accommodating part 42 is provided with a plurality of vertically arranged third limiting bulges 45, the inner peripheral wall of the support frame 5 is provided with a plurality of vertically arranged third limiting grooves 55, the number and positions of the third limiting bulges 45 are respectively corresponding to those of the third limiting grooves 55, the second adjusting sleeve 4 moves up and down when the first adjusting assembly 2 is rotated, the third limiting bulges 45 move up and down along the third limiting grooves 55 during the up and down movement of the second adjusting sleeve 4, and the third limiting bulges 45 is matched with the limiting grooves 55 to play a role of position limiting during the up and down movement of the second adjusting sleeve 4 and avoid deviation of the second adjusting sleeve 4, thus to make the grinding device work more stably and reliably.

Further, the support frame 5 is provided with a step surface 54, the lower edge of the first adjusting assembly 2 is located on the step surface 54, the outer peripheral wall of the support frame 5 is provided with a holding hole, the holding hole is arranged above the step surface 54, a telescopic bead 72 is arranged in the holding hole, and the inner peripheral wall of the first adjusting assembly 2 is provided with a plurality of recesses 22. When the first adjusting assembly 2 is rotated, the telescopic bead 72 is transferred from one recess 22 to another different recess 22; in this process, a "clicking" sound is emitted, i.e., when the first adjusting assembly 2 is rotated, the second connecting sleeve 7 moves up and down, the grinding channel is changed, and at the same time the telescopic bead 72 will make a "clicking" sound, so that different "gear positions" can be adjusted by a user to obtain a suitable size of ground particles.

Further, the second adjusting assembly also comprises a third adjusting sleeve 30, the third adjusting sleeve 30 is arranged below the second adjusting sleeve 4 and connected with the second adjusting sleeve 4, the second adjusting sleeve 4 moves upward to drive the third adjusting sleeve 30 to move upward, and the lower end of the female grinding head 100 is in contact with the upper edge of the third adjusting sleeve 30. Specifically, the outer peripheral wall of the third adjusting sleeve 30 is provided with an annular bulge, the inner peripheral wall of the accommodating part 42 is provided with an annular groove 22, the annular bulge is matched with the annular groove 22 to make the third adjusting sleeve 30 clamped with the second adjusting sleeve 4, and the third adjusting sleeve 30 is driven by the up and down movement of the second adjusting sleeve 4 to move up and down. The upper end of the female grinding head 100 is in contact with the lower end of the connecting part 41, the lower end of the grinding head 100 is in contact with the upper edge of the third adjusting sleeve 30, i.e., the female grinding head 100 is placed between the two and moves up and down with the up and down movement of the third adjusting sleeve 30; in this process, the male grinding head 200 will not move accordingly up and down, but the grinding channel is changed by the up and down movement of the female grinding head 100, so that the particle size of the ground material is changed.

The present application is described in detail above. Specific individual cases are applied herein for elaborating the principle and embodiments of the present application. The illustration of the above embodiments is merely used for helping to understand the present application and the core thought. It should be noted that for those ordinary skilled in the art, several improvements and modifications can be made to the present application without departing from the principles of the present application, and these improvements and modifications shall also fall into the protection scope of claims of the present application.

## Claims

1. A grinding device, comprising a shell (1) and an adjusting mechanism, a male grinding head (200) and a female grinding head (100) are arranged in the shell (1), a grinding channel is formed between the male grinding head (200) and the female grinding head (100), the adjusting mechanism comprises a first adjusting assembly (2) and a second adjusting assembly, the first adjusting assembly (2) is connected with the shell (1), the second adjusting assembly comprises a first adjusting sleeve (3) and a second adjusting sleeve (4) which are screwed together, the first adjusting sleeve (3) is rotated accordingly when the first adjusting assembly (2) is rotated, the second adjusting sleeve (4) is driven by the rotation of the first adjusting sleeve (3) to move up and down, and the size of the grinding channel is changed by the up and down movement of the second adjusting sleeve (4).

2. The grinding device according to claim 1, wherein the inner wall of the first adjusting assembly (2) is provided with at least one first limiting groove (21), the outer wall of the first adjusting sleeve (3) is provided with at least one first limiting bulge (31), the position of the first limiting groove (21) is corresponding to that of the first limiting bulge (31), and the first limiting bulge (31) is located in the first limiting groove (21).

3. The grinding device according to claim 1, wherein the inner wall of the first adjusting assembly (2) is provided with at least one second limiting bulge, the outer wall of the first adjusting sleeve (3) is provided with at least one second limiting groove, the position of the second limiting groove is corresponding to that of the second limiting bulge, and the second limiting bulge is located in the second limiting groove.

4. The grinding device according to claim 1, wherein the first adjusting sleeve (3) is provided with internal threads, the second adjusting sleeve (4) is provided with external threads, and the first adjusting sleeve (3) and the second adjusting sleeve (4) are screwed together through the internal and external threads.

5. The grinding device according to claim 4, wherein the second adjusting sleeve (4) comprises a connecting part (41) and an accommodating part (42), the connecting part (41) and the accommodating part (42) are integrated in one piece, the connecting part (41) is arranged above the accommodating part (42), the external threads are provided on the outer peripheral wall of the connecting part (41), and the accommodating part (42) is sleeved outside the female grinding head (100).

6. The grinding device according to claim 5, wherein the inner peripheral wall of the connecting part (41) is provided with a diversion surface (43), and the diversion surface (43) is arranged at the upper end of the connecting part (41).

7. The grinding device according to claim 5, wherein the second adjusting assembly also comprises a third adjusting sleeve (30), the third adjusting sleeve (30) is arranged below the second adjusting sleeve (4) and connected with the second adjusting sleeve (4), the second adjusting sleeve (4) moves upward to drive the third adjusting sleeve (30) to move upward, and the lower end of the female grinding head (100) is in contact with the upper edge of the third adjusting sleeve (30).

8. The grinding device according to claim 7, wherein the outer peripheral wall of the third adjusting sleeve (30) is provided with at least one first clamping bulge, the inner peripheral wall of the accommodating part (42) is provided with at least one first clamping groove, and the first clamping bulge is matched with the first clamping groove to make the third adjusting sleeve (30) clamped with the second adjusting sleeve (4).

9. The grinding device according to claim 1, wherein the grinding device also comprises a support frame (5), the support frame (5) is arranged between the first adjusting assembly (2) and the first adjusting sleeve (3), the support frame (5) is provided with a hollow structure, and the first adjusting assembly (2) is connected with the first adjusting sleeve (3) at the position of the hollow structure.

10. The grinding device according to claim 1, wherein a first connecting sleeve (6) is connected above the shell (1), and the first connecting sleeve (6) is connected with a feeding assembly (8).
